# EUROPEAN PATENT APPLICATION

(11) **EP 4 184 646 A1**
(43) Date of publication of application: **24.05.2023**
(21) Application number: 21842970.2
(22) Date of filing: 14.07.2021
(51) Int. Cl.: H01M 10/0567

(54) **SILANE ADDITIVE, ELECTROLYTE AND LITHIUM ION BATTERY CONTAINING SAME**

(30) Priority: 15.07.2020 CN 202010679893; 31.07.2020 CN 202010756752
(71) Applicant: Zhejiang Research Institute of Chemical Industry Co., Ltd., Hangzhou, Zhejiang 310023 (CN); Zhejiang Zhonglan New Energy Materials Co., Ltd., Huzhou, Zhejiang 313100 (CN); Sinochem Lantian Co., Ltd., Hangzhou, Zhejiang 310051 (CN)
(72) Inventor: DING, Xianghuan, Huzhou, Zhejiang 313100 (CN); LI, Nan, Huzhou, Zhejiang 313100 (CN); YAN, Hong, Huzhou, Zhejiang 313100 (CN); JIANG, Yiyi, Huzhou, Zhejiang 313100 (CN); LI, Zhongkai, Huzhou, Zhejiang 313100 (CN); MA, Guoqiang, Huzhou, Zhejiang 313100 (CN); XU, Chong, Huzhou, Zhejiang 313100 (CN)
(74) Representative: De Clercq & Partners
(86) International application number: PCT/CN2021/106328
(87) International publication number: WO 2022/012601

(57) **Abstract**

Use of a silane additive with carbon-carbon triple bond in an electrolyte for inhibiting the gas production of a cell, use of a combined additive of the silane additive and a film-forming additive in the electrolyte, use of a combined additive of the silane additive and a fluorine-containing lithium salt additive in the electrolyte, an electrolyte and a lithium ion battery containing the silane additive. The combined use of a silane additive and a film-forming additive and the combined use of a silane additive and a fluorine-containing lithium salt additive can not only inhibit the gas production of a cell and improve the high-temperature storage performance of a battery, but also improve the stability of the battery in a high-temperature cycle and a room temperature cycle.

## Description

### Technical Field

The present disclosure relates to a lithium ion battery electrolyte, in particular, to silane additives with carbon-carbon triple bond, combined additives of the silane additive and film-forming additives, combined additives of the silane additive and fluorine-containing lithium salt additive, electrolyte and lithium ion battery containing the silane additives.

### Background

High energy density is a development trend of lithium ion batteries. The commonly used improvement methods include elevating the working voltage or increasing the nickel content in the cathode, but both methods bring new challenges to the cycle performance and safety performance of the cell. Therefore, high-temperature cycle performance and high-temperature storage stability of batteries are of great concern.

In order to improve the high-temperature storage performance of a lithium ion battery, additives, such as vinylene carbonate (VC), vinyl ethylene carbonate (VEC), 1,3-propane sultone (PS), prop-1-ene-1,3-sultone (PST) and tris(trimethylsilyl) borate (TMSB), are generally added in an electrolyte to improve the high temperature performance. VC and VEC can form SEI films on a negative electrode, so as to inhibit a side reaction between the electrolyte and the negative electrode, thereby improving the stability of the electrode under high-temperature storage. In addition to forming films on the negative electrode, PS, PST and TMSB can also form CEI films on the surface of a high-nickel positive electrode, so as to inhibit the dissolution of metal ions and corresponding parasitic reactions in the high-nickel positive electrode, such that the effect of improving the high-temperature storage performance of the lithium ion battery with the high-nickel positive electrode is achieved.

However, these additives have disadvantages. In a high-voltage battery system, VEC and VC can cause large volume expansion (gas production) of the battery after high-temperature storage, and the effect of inhibiting the growth rate of cell impedance is also relatively poor. The sulfonate additives such as PS and PST have significant effects of inhibiting the gas production of the cell, but have relatively high initial impedance and impedance growth rate, which are bad for the low-temperature performance and rate performance of the battery. More importantly, PS is a carcinogen, which is on the Reach list of controlled substances, and is increasingly restricted in usage. Homologues or structural analogues such as PST or 1,4-butane sultone (BS) have similar risks and are thus not recommended for use. Although TMSB can improve the high-temperature performance of a high-nickel material system, but TMSB is insufficient in the effect of inhibiting the gas production and the growth of impedance of the cell.

Disclosed in Patent CN109888386A by Dongguan Shanshan Battery Materials Co., Ltd are a chain sulfate-containing compound M and a cyclic sulfonate compound N. The compound M can participate in the formation of passivation films at the surface of positive and negative electrodes, so as to improve high-temperature performance and inhibit the gas production of the cell; however, the compound M has relatively high impedance and poor cycle performance. The compound N can improve the cycle performance of the battery and adjust the impedance; however, the compound N is unstable and has high requirement for storage and usage environments. The combined use of the compound M and the compound N may optimize the cycle performance and storage performance of the battery, but also faces the problem that the compound N is unstable.

Disclosed in Patent CN109309248A by Contemporary Amperex Technology Co., Ltd. are combined additives of a sulfate compound and a phosphate compound. The combined additive may preferably form a film on the surface of a positive electrode, so as to prevent the HF from combining with an SEI film or a CEI film to produce gas, and simultaneously effectively protect an electrode-electrolyte interface, thereby reducing the loss of active lithium under a high-temperature condition and significantly improving the high-temperature storage performance of the battery. However, the high-temperature storage performance of the combined additives still needs to be improved, and no improvement in high-temperature cycle stability is mentioned.

In general, for the current high-temperature performance improvement additives, the high-temperature storage performance needs to be improved. Meanwhile, the interface protection films they formed are mostly with high initial impedance and high impedance growth rate, and the rate performance, low-temperature performance and long-term cycle stability of the battery are degraded. Therefore, it is a current technical challenge to take the high-temperature cycle stability, the low-temperature performance and the rate performance of the battery into consideration, while improving the high-temperature storage performance.

### Summary

In order to solve the above technical problem, the present disclosure provides a silane additive and a silane additive composition which are stable in compound, can inhibit the gas production of a cell and simultaneously improve the high-temperature storage and high-temperature cycle performance of a battery.

The objective of the present disclosure is implemented by the following technical solutions.

In an aspect, the present disclosure provides use of a silane additive with carbon-carbon triple bond in an electrolyte. The silane additive can inhibit the gas production of a cell and has a structure shown as the following formula (I):

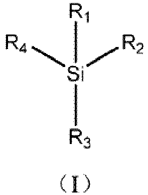

Where, R1, R2, R3 and R4 are independently selected from any one of alkyl, alkynyl, fluoroalkyl or fluoroalkynyl; and at least one of the R1, the R2, the R3 or the R4 contains a carbon-carbon triple bond.

An excessively long alkyl or alkynyl chain to trigger a steric effect can cause low film-forming efficiency of the interface between a material and the electrolyte and excessively high internal resistance. In order to avoid the problem, preferably, the R1, the R2, the R3 and the R4 are independently selected from one of C1-C6 alkyl, C2-C6 alkynyl, fluoro C1-C6 alkyl or fluoro C2-C6 alkynyl. More preferably, the R1, the R2, the R3 and the R4 are independently selected from one of methyl, ethyl, trifluoromethyl, trifluoroethyl, ethynyl or propynyl. Most preferably, the silane additive is selected from at least one of the following structures:

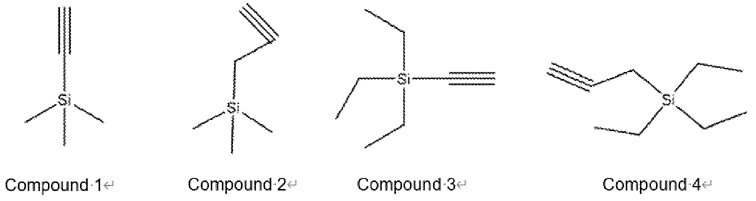

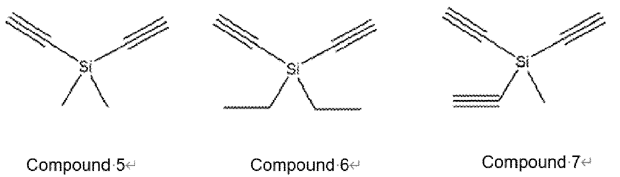

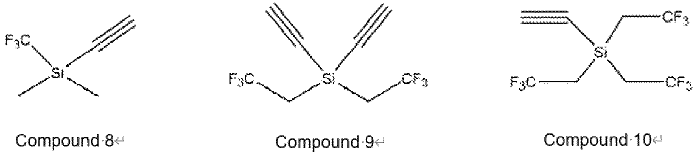

The mass of the silane additive accounts for 0.1%-5.0% of the total mass of the electrolyte. Under this concentration, the silane additive can play a role in inhibiting the gas production of the cell. Preferably, the mass of the silane additive accounts for 0.2%-3.0% of the total mass of the electrolyte.

The silane additive of the present disclosure is subjected to an oxidation polymerization on a positive electrode or reduction polymerization on a negative electrode when being added in the electrolyte, so as to form a relatively-compact surface film. The surface film can isolate the electrolyte and the positive electrode with strong oxidability (or the negative electrode with strong reducibility) while having certain ion permeability. By this mean, side reactions of solvents in the electrolyte with electrodes under high temperature are reduced. For example, carbon dioxide, carbon monoxide, alkane or olefin gases are produced in a decomposition reaction or an oxidation reaction of a carbonate solvent, resulting in the gas production of a battery during placement or storage. If the side reactions between the solvents and the electrodes are inhibited, the gas production of the battery during high-temperature storage can be inhibited.

The silane compound of the present disclosure shows the effect of inhibiting the gas production of a cell in high-temperature storage, but its high-temperature cycle performance is still not ideal. The reason may be that unsaturated silane has high impedance during film formation, and internal interface impedance of the battery is relatively high. Through research, the inventor found that, when other film-forming additives are further added to the electrolyte, a new surface film layer can be formed on the negative electrode or the positive electrode, affecting the structure of the surface film. Thereby it can effectively reduce the impedance of the electrodes, and simultaneously improve high-temperature storage performance and high-temperature cycle performance.

Therefore, the present disclosure further provides the use of combined additives of the silane additive described in any one of the above and film-forming additive in an electrolyte. A film-forming potential of the film-forming additive is lower than 1.5V (vs. Li⁺/Li), and the mass of the film-forming additive accounts for 0.1%-8.0% of the total mass of the electrolyte. The mass of the silane additive accounts for 0.1%-5.0% of the total mass of the electrolyte. Preferably, the mass of the film-forming additive accounts for 0.2%-3.0% of the total mass of the electrolyte, and the mass of the silane additive accounts for 0.2%-3.0% of the total mass of the electrolyte. More preferably, the mass of the film-forming additive accounts for 0.2%-2.0% of the total mass of the electrolyte, and the mass of the silane additive accounts for 0.2%-2.0% of the total mass of the electrolyte.

According to the use of the combined additive of the silane additive and the film-forming additive in the electrolyte, preferably, the film-forming additive is selected from at least one of an anhydride compound, a sulfonate compound, a sulfate compound, a trimethylsilyl compound, an unsaturated cyclic carbonate compound or a fluoro cyclic carbonate compound.

The anhydride compound is selected from at least one of succinic anhydride(SA), maleic anhydride(MAN) or citraconic anhydride(CA); the sulfonate compound is selected from at least one of 1,3-propane sultone(1,3-PS), 1,4-butane sultone(1,4-BS), 1,5,2,4-dioxadithiane 2,2,4,4-tetraoxide(MMDS) or prop-1-ene-1,3-sultone(PST); the sulfate compound is selected from at least one of ethylene sulfate(DTD), Trimethylene sulfate(TMSa), methyl ethylene sulfate(MeDTD) or 4,4'-bis(ethylene sulfate) (BiDTD); the trimethylsilyl compound is selected from at least one of Tris(trimethylsilyl) borate(TMSB), tris(trimethylsilyl)phosphate(TMSP), tris(trimethylsilyl) phosphite(TMSPi) or tris(trimethylsilyl) trifluoromethanesulfonate; the unsaturated cyclic carbonate compound is selected from vinylene carbonate(VC) and/or vinyl ethylene carbonate (VEC); and the fluoro cyclic carbonate compound is selected from at least one of fluoroethylene carbonate(FEC), difluoroethylene carbonate(DFEC) or 3,3,3 -trifluoropropylene carbonate(TFPC).

More preferably, the film-forming additive is selected from at least one of vinylene carbonate, 1,3-propane sultone , tris(trimethylsilyl)phosphate or ethylene sulfate .

The present disclosure further provides a lithium ion battery electrolyte. The lithium ion battery electrolyte includes a lithium salt, an organic solvent and the silane additive described in any one of the above or the combined additives of the silane additive and the film-forming additive described in any one of the above.

A conventional lithium salt in the electrolyte is selected as the lithium salt. Preferably, the lithium salt is selected from at least one of lithium hexafluorophosphate(LiPF₆), lithium tetrafluoroborate (LiBF4), lithium bis(oxalate)borate(LiBOB), lithium difluoro(oxalato)borate(LiDFOB), lithium bis(fluorosulfonyl)imide(LiFSI) or lithium bis(trifluoromethanesulfonyl)imide(LiTFSI); and the concentration of the lithium salt in the electrolyte is 0.3M-3M. More preferably, the lithium salt includes the lithium hexafluorophosphate, and the concentration of the lithium salt in the electrolyte is 0.3-2M.

A conventional solvent in the electrolyte is selected as the organic solvent. Preferably, the organic solvent is selected from a C3-C6 carbonate compound, a C3-C8 carboxylic ester compound, a sulfone compound or an ether compound. More preferably, the C3-C6 carbonate compound is selected from at least one of ethylene carbonate, propylene carbonate, butene carbonate, dimethyl carbonate, methyl ethyl carbonate, diethyl carbonate, dipropyl carbonate, methyl propyl carbonate or ethyl propyl carbonate; the C3-C8 carboxylic ester compound is selected from at least one of γ-butyrolactone, methyl acetate, methyl propionate, methyl butyrate, ethyl acetate, ethyl propionate, ethyl butyrate, propyl acetate or propyl propionate; the sulfone compound is sulfolane; and the ether compound is selected from at least one of triethylene glycol dimethyl ether or tetraethylene glycol dimethyl ether.

The present disclosure further provides a lithium ion battery. The lithium ion battery includes a positive electrode, a negative electrode, a separator, and the electrolyte described in any one of the above.

The positive electrode uses a common positive electrode in the field of lithium ion batteries. Preferably, the positive active substance is selected from one of LiNi_{1-x-y-z}CoₓMn_{y}Al_{z}O₂, lithium nickel manganese oxide, lithium cobaltate, a lithium-rich manganese-based solid solution, lithium manganese oxide or lithium iron phosphate, wherein 0≤x≤1, 0≤y≤1, 0≤z≤1, and 0≤x+y+z≤1.

The negative electrode uses a common negative electrode in the field of lithium batteries. Preferably, the negative active substance is selected from one of artificial graphite, coated natural graphite, a silicon carbon negative electrode, a silicon negative electrode or lithium titanate.

The voltage of the lithium ion battery may be selected from a conventional battery voltage range of 2.5 to 4.2V or a high voltage range of more than 4.2V.

The present disclosure further provides a method for simultaneously improving the high-temperature storage performance and high-temperature cycle performance of a battery. The method includes: adding, in an electrolyte, combined additives of the silane additive described in any one of the above, shown in a formula (I) while the mass of the silane additive accounts for 0.1%-5.0% of the total mass of the electrolyte and other film-forming additives with the mass accounting for 0.1%-8.0% of the total mass of the electrolyte.

In another aspect, the present disclosure further provides use of a silane additive composition in an electrolyte. The composition includes a silane additive and a fluorine-containing lithium salt additive.

The silane additive is used to inhibit the gas production of a cell, has the mass accounting for 0.01%-10.0% of the total mass of the electrolyte, and has a structure shown as the following formula (I):

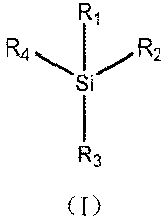

Where, R1, R2, R3 and R4 are independently selected from any one of alkyl, alkynyl, fluoroalkyl or fluoroalkynyl; and at least one of the R1, the R2, the R3 or the R4 contains a carbon-carbon triple bond.

The fluorine-containing lithium salt additive is used to improve initial impedance of the cell and inhibit the continuous growth of impedance of the cell during circulation, and the mass of the fluorine-containing lithium salt additive accounts for 0.1%-10.0% of the total mass of the electrolyte.

More preferably, the mass of the silane additive accounts for 0.1%-3.0% of the total mass of the electrolyte, and the mass of the fluorine-containing lithium salt additive accounts for 0.2%-5.0% of the total mass of the electrolyte.

According to the use of the silane additive composition in the electrolyte, preferably, the R1, the R2, the R3 and the R4 are independently selected from C1-C6 alkyl, C2-C6 alkynyl, fluoro C1-C6 alkyl or fluoro C2-C6 alkynyl, and more preferably, the silane additive is selected from at least one of the following structures:

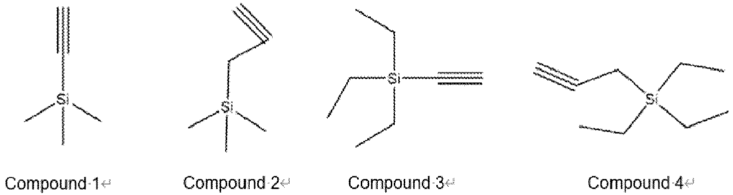

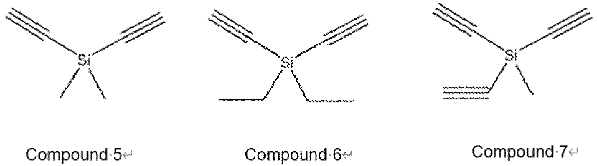

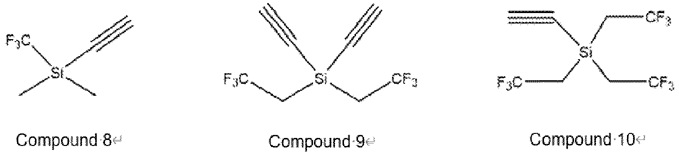

The silane additive can be oxidized and decomposed in the positive electrode in preference to the solvent, and form a stable protection film on the surface of the positive electrode. The stable protection film can inhibit the electrolyte from being subjected to a parasitic reaction with the positive material, and prevent the dissolution of positive metal ions, thereby improving the high-temperature storage performance of the battery. In addition, compared with current high-temperature additives, the silane additive of the present disclosure has low initial impedance, facilitating the improvement of the comprehensive performance of the battery.

The fluorine-containing lithium salt additive is a fluorine-containing lithium salt compound which uses boron or phosphorus as central ions. Preferably, the fluorine-containing lithium salt additive is selected from at least one of lithium difluoro oxalate borate (LiDFOB), lithium tetrafluoroborate (LiBF₄), Lithium difluorodi(oxalato)phosphate(LiDFOP) or Lithium tetrafluoro(oxalato)phosphate(LiTFOP). The fluorine-containing lithium salt additive can build an interface film which is stronger in ionic conductivity and conductive to charge migration; and continuous modification can be performed on the interface films of the positive and negative electrodes by means of the interface film, so as to inhibit the continuous growth of cell impedance of the battery during circulation, thereby improving the long-term high-temperature cycle stability of the battery.

By means of the combined use of the silane additive and the fluorine-containing salt additive in the electrolyte, the gas production of the battery during high-temperature storage can be further inhibited, the initial impedance is reduced, the growth of the impedance of the battery during circulation is suppressed, and the capacity recovery and capacity retention performance of the battery are improved, thereby improving the rate and low-temperature discharge performance of the battery.

The present disclosure further provides a lithium ion battery electrolyte. The lithium ion battery electrolyte includes a lithium salt, an organic solvent and the composition of the silane additive and the fluorine-containing lithium salt additive described in any one of the above.

A conventional lithium salt in the electrolyte is selected as the lithium salt. Preferably, the lithium salt is selected from at least one of lithium hexafluorophosphate(LiPF₆), lithium bis(fluorosulfonyl)imide(LiFSI) or lithium bis(trifluoromethanesulfonyl)imide(LiTFSI); and the molar concentration of the lithium salt in the electrolyte is 0.4 - 1.6mol/L. More preferably, the lithium salt includes the lithium hexafluorophosphate, and the molar concentration of the lithium hexafluorophosphate in the electrolyte is 0.6 - 1.2mol/L.

A common solvent in the electrolyte is selected as the organic solvent. Preferably, the organic solvent is selected from a C3-C6 carbonate compound, a C3-C8 carboxylic ester compound, a sulfone compound or an ether compound. More preferably, the C3-C6 carbonate compound is selected from at least one of ethylene carbonate, propylene carbonate, butene carbonate, dimethyl carbonate, methyl ethyl carbonate, diethyl carbonate, dipropyl carbonate, methyl propyl carbonate or ethyl propyl carbonate; the C3-C8 carboxylic ester compound is selected from at least one of γ-butyrolactone, methyl acetate, methyl propionate, methyl butyrate, ethyl acetate, ethyl propionate, ethyl butyrate, propyl acetate or propyl propionate; the sulfone compound is sulfolane; and the ether compound is selected from at least one of triethylene glycol dimethyl ether or tetraethylene glycol dimethyl ether. Most preferably, the C3-C6 carbonate compound is selected from at least one of ethylene carbonate, propylene carbonate, butene carbonate, dimethyl carbonate, methyl ethyl carbonate, diethyl carbonate, dipropyl carbonate, methyl propyl carbonate or ethyl propyl carbonate; the C3-C8 carboxylic ester compound is selected from at least one of γ-butyrolactone, methyl acetate, methyl propionate, methyl butyrate, ethyl acetate, ethyl propionate, ethyl butyrate, propyl acetate or propyl propionate; the sulfone compound is sulfolane; and the ether compound is selected from at least one of triethylene glycol dimethyl ether or tetraethylene glycol dimethyl ether.

The present disclosure further provides a lithium ion battery. The lithium ion battery includes a positive electrode, a negative electrode, a separator, and the electrolyte described in any one of the above.

The positive electrode uses a common positive electrode in the field of lithium batteries. Preferably, the positive active substance is selected from one of LiNi_{1-x-y-z}CoₓMn_{y}Al_{z}O₂, lithium nickel manganese oxide, lithium cobaltate, a lithium-rich manganese-based solid solution, lithium manganese oxide or lithium iron phosphate, wherein 0≤x≤1, 0≤y≤1, 0≤z≤1, and 0≤x+y+z≤1.

The negative electrode uses a common negative electrode in the field of lithium batteries. Preferably, the negative active substance is selected from one of artificial graphite, coated natural graphite, a silicon carbon negative electrode, a silicon negative electrode or lithium titanate.

The voltage of the lithium ion battery may be selected from a conventional battery voltage range of 2.0 to 4.2V or a high voltage test range of more than 4.2V.

The present disclosure further provides a method for simultaneously improving the high-temperature storage performance and high-temperature cycle performance of a battery. The method includes: adding, in an electrolyte, the composition of the silane additive and the fluorine-containing lithium salt additive described in any one of the above.

Compared with the prior art, the present disclosure has the following beneficial effects.
1. When being applied to the electrolyte, the silane additive containing the carbon-carbon triple bond of the present disclosure is more stable under high temperature, the CEI film formed on the surface of the positive electrode or the negative electrode is not easy to damage, such that the production of gases is reduced, and the gas production of the cell is inhibited, thereby improving the high-temperature storage performance of the battery.
2. In the present disclosure, by means of the combined use of the silane additive and other film-forming additives, a new surface film layer can be formed on the negative electrode or the positive electrode. The new surface film can effectively reduce the impedance of the electrode, and the high-temperature storage performance and high-temperature cycle stability of the battery can be simultaneously improved.
3. The silane additive containing the carbon-carbon triple bond of the present disclosure can form a protective layer on the surface of the positive electrode, so as to inhibit the parasitic reaction between the electrolyte and the positive material during high-temperature storage and inhibit catalytic decomposition of the positive material to the electrolyte, thereby effectively improving volume expansion during high-temperature storage and high-temperature cycle. Compared with the high-temperature additives in the prior art, the silane additive has lower initial impedance and impedance growth rate. In addition, the fluorine-containing lithium salt additive of the present disclosure can be simultaneously and continuously subjected to the film-forming reaction on the positive and negative electrodes. It can adjust the structure and components of the interface films of the positive and negative electrodes, so as to promote the positive and negative electrodes to produce the interface film with low impedance and high stability, thereby improving the rate, low-temperature discharge and long-term high-temperature cycle stability of the battery. In the present disclosure, by means of the combined use of the silane additive containing the carbon-carbon triple bond and the fluorine-containing lithium salt additive, and when being applied to a ternary lithium ion battery or other high-voltage battery systems, the high-temperature storage performance and high-temperature cycle stability of the battery may be simultaneously improved, and both the low-temperature discharge performance and rate performance of the battery are taken into consideration.

### Detailed Description of the Embodiments

The present disclosure is further described below with reference to specific embodiments, but the disclosure is not limited to these specific embodiments. It should be recognized by those skilled in the art that, the present disclosure covers all alternatives, improvements and equivalents that may be included within the scope of the claims.

In an aspect, preparation examples and embodiments of implementations of the present disclosure are shown as follows.

### Preparation example 1

Preparation of a basic electrolyte: in a high-purity argon glove box of which oxygen content and water content were not higher than 0. 1ppm, Ethylene Carbonate (EC), Diethyl Carbonate (DEC) and Ethyl Methyl Carbonate (EMC) were mixed according to a mass ratio being EC:DEC:EMC = 3:2:5; and then lithium hexafluorophosphate (LiPF₆) with the mass fraction of 12.5wt% was slowly added to the mixed solution.

Preparation of a lithium ion battery: the well-prepared lithium ion battery electrolyte was injected into a fully-dried 4.3V LiNi_{0.83}Co_{0.07}Mn_{0.2}O₂/graphite soft-pack battery, and then a capacity grading test was performed after 45°C placement, formation and secondary sealing were performed on the battery.

### Embodiment 1.1

Operations of this embodiment were the same as Preparation example 1, and the difference only lay in that, a compound 1 of which mass accounted for 0.5wt% of the total mass of the electrolyte was added into the electrolyte.

### Embodiment 1.2

Operations of this embodiment were the same as Preparation example 1, and the difference only lay in that, a compound 3 of which mass accounted for 0.5wt% of the total mass of the electrolyte was added into the electrolyte.

### Embodiment 1.3

Operations of this embodiment were the same as Preparation example 1, and the difference only lay in that, a compound 5 of which mass accounted for 0.5wt% of the total mass of the electrolyte was added into the electrolyte.

### Embodiment 1.4

Operations of this embodiment were the same as Preparation example 1, and the difference only lay in that, a compound 10 of which mass accounted for 0.5wt% of the total mass of the electrolyte was added into the electrolyte.

### Embodiment 1.5

Operations of this embodiment were the same as Preparation example 1, and the difference only lay in that, the compound 1 of which mass accounted for 1.5wt% of the total mass of the electrolyte was added into the electrolyte.

### Embodiment 1.6

Operations of this embodiment were the same as Preparation example 1, and the difference only lay in that, the compound 1 of which mass accounted for 0.5wt% of the total mass of the electrolyte and 1.0wt% vinylene carbonate (VC) were added into the electrolyte.

### Embodiment 1.7

Operations of this embodiment were the same as Preparation example 1, and the difference only lay in that, the compound 3 of which mass accounted for 0.5wt% of the total mass of the electrolyte and 1.0wt% 1,3-propane sultone (PS) were added into the electrolyte.

### Embodiment 1.8

Operations of this embodiment were the same as Preparation example 1, and the difference only lay in that, the compound 5 of which mass accounted for 0.5wt% of the total mass of the electrolyte and 1.0wt% tris(trimethylsilyl)phosphate (TMSP) were added into the electrolyte.

### Embodiment 1.9

Operations of this embodiment were the same as Preparation example 1, and the difference only lay in that, the compound 7 of which mass accounted for 0.5wt% of the total mass of the electrolyte and 1.0wt% ethylene sulfate (DTD) were added into the electrolyte.

### Embodiment 1.10

Operations of this embodiment were the same as Preparation example 1, and the difference only lay in that, the compound 10 of which mass accounted for 0.5wt% of the total mass of the electrolyte and 1.0wt% prop-1-ene-1,3-sultone (PST) were added into the electrolyte.

### Embodiment 1.11

Operations of this embodiment were the same as Preparation example 1, and the difference only lay in that, the compound 1 of which mass accounted for 0.2wt% of the total mass of the electrolyte and 1.0wt% vinylene carbonate (VC) were added into the electrolyte.

### Embodiment 1.12

Operations of this embodiment were the same as Preparation example 1, and the difference only lay in that, the compound 3 of which mass accounted for 1.0wt% of the total mass of the electrolyte and 1.0wt% of the vinylene carbonate (VC) were added into the electrolyte.

### Embodiment 1.13

Operations of this embodiment were the same as Preparation example 1, and the difference only lay in that, the compound 5 of which mass accounted for 2.0wt% of the total mass of the electrolyte and 1.0wt% vinylene carbonate (VC) were added into the electrolyte.

### Embodiment 1.14

Operations of this embodiment were the same as Preparation example 1, and the difference only lay in that, the compound 10 of which mass accounted for 3.0wt% of the total mass of the electrolyte and 1.0wt% vinylene carbonate (VC) were added into the electrolyte.

### Embodiment 1.15

Operations of this embodiment were the same as Preparation example 1, and the difference only lay in that, the compound 1 of which mass accounted for 0.5wt% of the total mass of the electrolyte and 0.2wt% vinylene carbonate (VC) were added into the electrolyte.

### Embodiment 1.16

Operations of this embodiment were the same as Preparation example 1, and the difference only lay in that, the compound 5 of which mass accounted for 0.5wt% of the total mass of the electrolyte and 2.0wt% vinylene carbonate (VC) were added into the electrolyte.

### Embodiment 1.17

Operations of this embodiment were the same as Preparation example 1, and the difference only lay in that, the compound 9 of which mass accounted for 0.5wt% of the total mass of the electrolyte and 3.0wt% vinylene carbonate (VC) were added into the electrolyte.

### Embodiment 1.18

Operations of this embodiment were the same as Preparation example 1, and the difference only lay in that, the compound 3 of which mass accounted for 0.5wt% of the total mass of the electrolyte and 8.0wt% vinylene carbonate (VC) were added into the electrolyte.

### Comparative example 1.1

Operations of this comparative example are the same as Preparation example 1, and the difference only lay in that, the compound 1,3-propane sultone (PS) of which mass accounted for 0.5wt% of the total mass of the electrolyte was added into the electrolyte.

### Comparative example 1.2

Operations of this comparative example are the same as Preparation example 1, and the difference only lay in that, a compound adiponitrile (ADN) of which mass accounted for 0.5wt% of the total mass of the electrolyte was added into the electrolyte.

### Comparative example 1.3

Operations of this comparative example are the same as Preparation example 1, and the difference only lay in that, a compound diphenyldimethoxysilane (DPDMS) of which mass accounted for 0.5wt% of the total mass of the electrolyte was added into the electrolyte.

### Comparative example 1.4

Operations of this comparative example are the same as Preparation example 1, and the difference only lay in that, the compound vinylene carbonate (VC) of which mass accounted for 1.5wt% of the total mass of the electrolyte was added into the electrolyte.

### Comparative example 1.5

Operations of this comparative example are the same as Preparation example 1, and the difference only lay in that, the vinylene carbonate (VC) of which mass accounted for 1.0wt% of the total mass of the electrolyte was added into the electrolyte.

### Comparative example 1.6

Operations of this comparative example are the same as Preparation example 1, and the difference only lay in that, the 1,3-propane sultone (PS) of which mass accounted for 1.0wt% of the total mass of the electrolyte was added into the electrolyte.

### Comparative example 1.7

Operations of this comparative example are the same as Preparation example 1, and the difference only lay in that, the prop-1-ene-1,3-sultone (PST) of which mass accounted for 1.0wt% of the total mass of the electrolyte was added into the electrolyte.

### Comparative example 1.8

Operations of this comparative example are the same as Preparation example 1, and the difference only lay in that, the tris(trimethylsilyl)phosphate (TMSP) of which mass accounted for 1.0wt% of the total mass of the electrolyte was added into the electrolyte.

### Comparative example 1.9

Operations of this comparative example are the same as Preparation example 1, and the difference only lay in that, the ethylene sulfate (DTD) of which mass accounted for 1.0wt% of the total mass of the electrolyte was added into the electrolyte.

### Comparative example 1.10

Operations of this comparative example are the same as Preparation example 1, and the difference only lay in that, the vinylene carbonate (VC) of which mass accounted for 2.0wt% of the total mass of the electrolyte was added into the electrolyte.

### Comparative example 1.11

Operations of this comparative example are the same as Preparation example 1, and the difference only lay in that, the vinylene carbonate (VC) of which mass accounted for 8.0wt% of the total mass of the electrolyte was added into the electrolyte.

### Comparative example 1.12

Operations of this comparative example are the same as Preparation example 1, and the difference only lay in that, the compound 5 of which mass accounted for 0.5wt% of the total mass of the electrolyte and 1.0wt% adiponitrile (ADN) were added into the electrolyte.

### Comparative example 1.13

Operations of this embodiment were the same as Preparation example 1, and the difference only lay in that, the compound 7 of which mass accounted for 0.5wt% of the total mass of the electrolyte and 1.0wt% trimethylsilylmethyl isocyanate (TMSNCS) were added into the electrolyte.

The normal-temperature and high-temperature cycle performance of the battery and the high-temperature storage performance of the battery in Embodiments 1.1 to 1.18 and Comparative examples 1.1 to 1.13 were respectively tested; and test results are shown in Table 1.

**Table 1 Test results of high and low-temperature performance**

| Group | Additive and mass content | 1C/1C-700-week cycle capacity retention rate% | | Change rate% of storage for 21 days at 60°C |
|---|---|---|---|---|
| | | 25°C | 45°C | Volume |
| Embodiment 1.1 | 0.5% compound 1 | 82.3 | 76.3 | 8.79 |
| Embodiment 1.2 | 0.5% compound 3 | 78.1 | 70.5 | 8.50 |
| Embodiment 1.3 | 0.5% compound 5 | 80.9 | 72.6 | 9.23 |
| Embodiment 1.4 | 0.5% compound 10 | 76.6 | 67.1 | 10.41 |
| Embodiment 1.5 | 1.5% compound 1 | 76.2 | 70.4 | 15.6 |
| Embodiment 1.6 | 0.5% compound 1 + 1.0% VC | 94.5 | 91.6 | 3.96 |
| Embodiment 1.7 | 0.5% compound 3 + 1.0% PS | 89.7 | 85.4 | 5.32 |
| Embodiment 1.8 | 0.5% compound 5 + 1.0% TMSP | 90.6 | 87.6 | 5.13 |
| Embodiment 1.9 | 0.5% compound 7 + 1.0% DTD | 92.3 | 89.7 | 4.52 |
| Embodiment 1.10 | 0.5% compound 10 + 1.0% PES | 81.6 | 78.5 | 5.73 |
| Embodiment 1.11 | 0.2% compound 1 + 1.0% VC | 84.6 | 80.2 | 6.32 |
| Embodiment 1.12 | 1.0% compound 3 + 1.0% VC | 88.6 | 83.9 | 4.49 |
| Embodiment 1.13 | 2.0% compound 5 + 1.0% VC | 81.2 | 78.7 | 5.13 |
| Embodiment 1.14 | 3.0% compound 10 + 1.0% VC | 70.5 | 66.4 | 7.51 |
| Embodiment 1.15 | 0.5% compound 1 + 0.2% VC | 78.9 | 77.6 | 5.89 |
| Embodiment 1.16 | 0.5% compound 5 + 2.0% VC | 87.5 | 85.2 | 6.56 |
| Embodiment 1.17 | 0.5% compound 9 + 3.0% VC | 80.5 | 72.2 | 9.56 |
| Embodiment 1.18 | 0.5% compound 3 + 8.0% VC | 52.4 | 48.3 | 26.5 |
| Comparative example 1.1 | 0.5%PS | 82.2 | 72.2 | 11.72 |
| Comparative example 1.2 | 0.5%ADN | 78.3 | 75.3 | 13.45 |
| Comparative example 1.3 | 0.5%DPDMS | 75.1 | 77.1 | 12.23 |
| Comparative example 1.4 | 1.5%VC | 82.4 | 78.1 | 7.62 |
| Comparative example 1.5 | 1.0%VC | 87.4 | 82.1 | 5.29 |
| Comparative example 1.6 | 1.0%PS | 80.1 | 70.0 | 7.25 |
| Comparative example 1.7 | 1.0%PES | 72.1 | 66.3 | 9.34 |
| Comparative example 1.8 | 1.0%TMSP | 84.1 | 75.6 | 6.82 |
| Comparative example 1.9 | 1.0%DTD | 85.3 | 78.7 | 5.56 |
| Comparative | 2.0%VC | 80.7 | 75.6 | 8.53 |
| example 1.10 | | | | |
| Comparative example 1.11 | 8.0%VC | 40.1 | 37.5 | 40.61 |
| Comparative example 1.12 | 0.5% compound 5 + 1.0% ADN | 84.2 | 75.4 | 6.73 |
| Comparative example 1.13 | 0.5% compound 7 + 1.0% TMSNCS | 79.6 | 74.3 | 8.21 |

By comparing the test results of Embodiments 1.1 to 1.4 and Comparative examples 1.1 to 1.3, it may be learned that, after the silane additive containing the carbon-carbon triple bond of the present disclosure was added into the electrolyte, the gas production of the cell is reduced.

By comparing the test results of Embodiments 1.5 to 1.18 and Comparative examples 1.4 to 1.11, it may be learned that, after the silane additive containing the carbon-carbon triple bond and the film-forming additive were combined, the high-temperature cycle performance of the cell was improved, and high-temperature storage performance was also improved. The VC, the PS, the TMSP and the DTD had better effects.

By comparing the test results of Embodiments 1.5 to 1.10 and Comparative examples 1.12 to 1.13, it may be learned that, compared with the combined use with other conventional additives with good high-temperature cycle performance, after the silane additive of the present disclosure and the film-forming additive were combined, the improvement in high-temperature cycle and high-temperature storage performance was more obvious.

In another aspect, preparation examples and embodiments of implementations of the present disclosure were shown as follows.

Preparation example 2:
Preparation of a basic electrolyte: in a high-purity argon glove box of which oxygen content and water content were not higher than 0.1ppm, Ethylene Carbonate (EC), Diethyl Carbonate (DEC) and Ethyl Methyl Carbonate (EMC) were mixed according to a mass ratio being EC:DEC:EMC = 3:2:5; and then the LiPF₆ was slowly added to the mixed solution until a molar concentration was 1mol/L.

Preparation of a lithium ion battery: the well-prepared lithium ion battery electrolyte was injected into a fully-dried 4.3V LiNi_{0.83}Co_{0.07}Mn_{0.2}O₂/graphite battery, and then a capacity grading test was performed after 45°C placement, formation and secondary sealing were performed on the battery.

### Embodiment 2.1

Operations of this embodiment were the same as Preparation example 2, and the difference only lay in that, 0.5% of the compound 1 by total mass of electrolyte and 0.5% lithium difluoro(oxalato)borate (LiDFOB) by total mass of electrolyte were added into the electrolyte.

### Embodiment 2.2

Operations of this embodiment were the same as Preparation example 2, and the difference only lay in that, 0.5% of the compound 1 by total mass of electrolyte and 1.0% lithium difluoro(oxalato)borate (LiDFOB) by total mass of electrolyte were added into the electrolyte.

### Embodiment 2.3

Operations of this embodiment were the same as Preparation example 2, and the difference only lay in that, 0.5% of the compound 1 by total mass of electrolyte and 2.0% lithium difluoro(oxalato)borate (LiDFOB) by total mass of electrolyte were added into the electrolyte.

### Embodiment 2.4

Operations of this embodiment were the same as Preparation example 2, and the difference only lay in that, 0.5% of the compound 1 by total mass of electrolyte and 3.0% lithium difluoro(oxalato)borate (LiDFOB) by total mass of electrolyte were added into the electrolyte.

### Embodiment 2.5

Operations of this embodiment were the same as Preparation example 2, and the difference only lay in that, 0.5% of the compound 1 by total mass of electrolyte and 5.0% lithium difluoro(oxalato)borate (LiDFOB) by total mass of electrolyte were added into the electrolyte.

### Embodiment 2.6

Operations of this embodiment were the same as Preparation example 2, and the difference only lay in that, 1.0% of the compound 1 by total mass of electrolyte and 1.0% lithium difluoro(oxalato)borate (LiDFOB) by total mass of electrolyte were added into the electrolyte.

### Embodiment 2.7

Operations of this embodiment were the same as Preparation example 2, and the difference only lay in that, 2.0% of the compound 1 by total mass of electrolyte and 1.0% lithium difluoro(oxalato)borate(LiDFOB) by total mass of electrolyte were added into the electrolyte.

### Embodiment 2.8

Operations of this embodiment were the same as Preparation example 2, and the difference only lay in that, 3.0% of the compound 1 by total mass of electrolyte and 1.0% lithium difluoro(oxalato)borate(LiDFOB) by total mass of electrolyte were added into the electrolyte.

### Embodiment 2.9

Operations of this embodiment were the same as Preparation example 2, and the difference only lay in that, 0.5% of the compound 3 by total mass of electrolyte and 1.0% lithium difluoro(oxalato)borate (LiDFOB) by total mass of electrolyte were added into the electrolyte.

### Embodiment 2.10

Operations of this embodiment were the same as Preparation example 2, and the difference only lay in that, 0.5% of the compound 3 by total mass of electrolyte and 1.0% lithium difluorodi(oxalato)phosphate (LiDFOP) by total mass of electrolyte were added into the electrolyte.

### Embodiment 2.11

Operations of this embodiment were the same as Preparation example 2, and the difference only lay in that, 0.5% of the compound 3 by total mass of electrolyte and 1.0% Lithium tetrafluoro(oxalato)phosphate (LiTFOP) by total mass of electrolyte were added into the electrolyte.

### Embodiment 2.12

Operations of this embodiment were the same as Preparation example 2, and the difference only lay in that, 0.5%of the compound 3 by total mass of electrolyte and 1.0% LiBF₄ by total mass of electrolyte were added into the electrolyte.

### Embodiment 2.13

Operations of this embodiment were the same as Preparation example 2, and the difference only lay in that, 0.5% of the compound 5 by total mass of electrolyte and 1.0% lithium difluoro(oxalato)borate(LiDFOB) by total mass of electrolyte were added into the electrolyte.

### Embodiment 2.14

Operations of this embodiment were the same as Preparation example 2, and the difference only lay in that, 0.5% of the compound 7 by total mass of electrolyte and 1.0% lithium difluoro(oxalato)borate(LiDFOB) by total mass of electrolyte were added into the electrolyte.

### Embodiment 2.15

Operations of this embodiment were the same as Preparation example 2, and the difference only lay in that, 0.5% of the compound 10 by total mass of electrolyte and 1.0% lithium difluoro(oxalato)borate(LiDFOB) by total mass of electrolyte were added into the electrolyte.

### Comparative example 2.1:

Operations of this comparative example were the same as Preparation example 2, that is, the basic electrolyte is used, and there is no additive.

### Comparative example 2.2:

Operations of this comparative example were the same as Preparation example 2, and the difference only lay in that, 0.5% of the compound 1 by total mass of electrolyte was added into the electrolyte.

### Comparative example 2.3:

Operations of this comparative example were the same as Preparation example 2, and the difference only lay in that, 1.0% of the compound 1 by total mass of electrolyte was added into the electrolyte.

### Comparative example 2.4:

Operations of this comparative example were the same as Preparation example 2, and the difference only lay in that, 1.0% lithium difluoro(oxalato)borate(LiDFOB) by total mass of electrolyte was added into the electrolyte.

### Comparative example 2.5:

Operations of this comparative example were the same as Preparation example 2, and the difference only lay in that, 1.0% 1,3-propane sultone (PS) by total mass of electrolyte was added into the electrolyte.

### Comparative example 2.6:

Operations of this comparative example were the same as Preparation example 2, and the difference only lay in that, 1.0% 1,3-propane sultone (PS) and 1.0% lithium difluoro(oxalato)borate(LiDFOB) by total mass of electrolyte were added into the electrolyte.

### Comparative example 2.7:

Operations of this comparative example were the same as Preparation example 2, and the difference only lay in that, 1.0% of the compound 3 by total mass of electrolyte was added into the electrolyte.

### Comparative example 2.8:

Operations of this comparative example were the same as Preparation example 2, and the difference only lay in that, 1.0% lithium difluorodi(oxalato)phosphate (LiDFOP) by total mass of electrolyte was added into the electrolyte.

### Comparative example 2.9:

Operations of this comparative example were the same as Preparation example 2, and the difference only lay in that, 0.5% prop-1-ene-1,3-sultone (PST) by total mass of electrolyte was added into the electrolyte.

### Comparative example 2.10:

Operations of this comparative example were the same as Preparation example 2, and the difference only lay in that, 0.5% prop-1-ene-1,3-sultone (PST) and 1.0% lithium difluorodi(oxalato)phosphate (LiDFOP) by total mass of electrolyte were added into the electrolyte.

### Comparative example 2.11:

Operations of this comparative example were the same as Preparation example 2, and the difference only lay in that, 0.5% prop-1-ene-1,3-sultone (PST) and 1.0% lithium difluoro(oxalato)borate (LiDFOB) by total mass of electrolyte were added into the electrolyte.

### Comparative example 2.12:

Operations of this comparative example were the same as Preparation example 2, and the difference only lay in that, 1.0% tris(trimethylsilyl) borate (TMSB) by total mass of electrolyte was added into the electrolyte.

### Comparative example 2.13:

Operations of this comparative example were the same as Preparation example 2, and the difference only lay in that, 1.0% tris(trimethylsilyl) borate (TMSB) and 0.5% lithium difluoro(oxalato)borate (LiDFOB) by total mass of electrolyte were added into the electrolyte.

Initial DCR, -20°C low-temperature discharge, 3C rate discharge of the battery, high-temperature cycle performance and high-temperature storage performance in Embodiments 2.1 to 2.15 and Comparative examples 2.1 to 2.13 were tested in a nickel cobalt manganese ternary battery; and test results are shown in Table 2.

**Table 2 Battery performance test table**

| Group | Additive and mass content | Percentage % of initial DCR of battery compared with Embodime nt 1 | -20°C low-temperat ure discharge capacity ratio (vs. 25°C)% | 3C rate dischar ge capacit y ratio% of battery | 1C/1C high-temperatur e cycle for 800 weeks | | Volum e change rate% after storage for 28 days at 60°C |
|---|---|---|---|---|---|---|---|
| | | | | | Capacit y retentio n rate% | DCR growt h rate% | |
| Embodime nt 2.1 | 0.5% compound 1 + 0.5% LiDFOB | 100 | 78.5 | 71.7 | 78.8 | 43.5 | 8.4 |
| Embodime nt 2.2 | 0.5% compound 1 + 1.0% LiDFOB | 80 | 82.6 | 76.4 | 80.2 | 35.3 | 7.5 |
| Embodime nt 2.3 | 0.5% compound 1 + 2.0% LiDFOB | 90 | 79.8 | 72.5 | 79.5 | 40.9 | 10.5 |
| Embodime nt 2.4 | 0.5% compound 1 + 3.0% LiDFOB | 90 | 79.6 | 72.4 | 77.9 | 41.2 | 11.2 |
| Embodime nt 2.5 | 0.5% compound 1 + 5.0% LiDFOB | 110 | 77.1 | 71.4 | 76.2 | 45.9 | 14.1 |
| Embodime nt 2.6 | 1.0% compound 1 + 1.0% LiDFOB | 110 | 76.8 | 70.2 | 77.9 | 41.2 | 8.25 |
| Embodime nt 2.7 | 2.0% compound 1 + 1.0% LiDFOB | 120 | 77.6 | 72.5 | 77.1 | 42.9 | 7.35 |
| Embodime nt 2.8 | 3.0% compound 1 + 1.0% LiDFOB | 150 | 74.0 | 70.9 | 76.1 | 48.9 | 8.25 |
| Embodime nt 2.9 | 0.5% compound 3 + 1.0% LiDFOB | 75 | 83.9 | 76.6 | 80.8 | 34.8 | 6.9 |
| Embodime nt 2.10 | 0.5% compound 3 + 1.0% LiDFOP | 75 | 84.1 | 76.8 | 81.2 | 33.9 | 7.1 |
| Embodime nt 2.11 | 0.5% compound 3 + 1.0% LiTFOP | 85 | 81.1 | 74.0 | 80.8 | 35.1 | 7.3 |
| Embodime nt 2.12 | 0.5% compound 3 + 1.0% LiBF₄ | 85 | 81.9 | 74.9 | 80.1 | 34.0 | 7.7 |
| Embodime nt 2.13 | 0.5% compound 5 + 1.0% LiDFOB | 90 | 80.0 | 73.0 | 81.2 | 35.2 | 6.9 |
| Embodime nt 2.14 | 0.5% compound 7 + 1.0% LiDFOB | 100 | 79.2 | 71.4 | 81.8 | 34.8 | 7.1 |
| Embodime nt 2.15 | 0.5% compound 10 + 1.0% LiDFOB | 80 | 82.9 | 76.7 | 82.0 | 33.5 | 7.0 |
| Comparati ve example 2.1 | No additive | 100 | 76.3 | 70.2 | 61.7 | 120 | 20.5 |
| Comparati ve example 2.2 | 0.5% compound 1 | 120 | 76.2 | 69.6 | 72.1 | 98.2 | 10.1 |
| Comparati ve example 2.3 | 1.0% compound 1 | 150 | 73.9 | 67.5 | 68.4 | 95.6 | 9.4 |
| Comparati ve example 2.4 | 1.0%LiDFOB | 80 | 82.1 | 73.9 | 73.2 | 58.2 | 15.2 |
| Comparati ve example 2.5 | 1.0%PS | 200 | 68.7 | 62.7 | 71.1 | 103.2 | 12.5 |
| Comparati ve example 2.6 | 1.0%PS+1.0%LiDFOB | 180 | 69.5 | 63.5 | 74.8 | 50.1 | 10.9 |
| Comparati ve example 2.7 | 1.0% compound 3 | 130 | 72.5 | 66.2 | 70.9 | 94.6 | 11.5 |
| Comparati ve example 2.8 | 1.0%LiDFOP | 70 | 81.9 | 74.6 | 73.8 | 56.9 | 15.8 |
| Comparati ve example 2.9 | 0.5%PST | 240 | 67.5 | 61.6 | 69.2 | 55.1 | 11.9 |
| Comparati ve example 2.10 | 0.5%PST+1.0%LiDFOP | 200 | 69.8 | 63.7 | 71.2 | 51.6 | 12.9 |
| Comparati ve example 2.11 | 0.5%PST+1.0%LiDFOB | 210 | 67.5 | 61.6 | 70.9 | 52.6 | 11.5 |
| Comparati ve example 2.12 | 1.0%TMSB | 100 | 76.3 | 71.5 | 70.5 | 60.9 | 15.5 |
| Comparati ve example 2.13 | 1.0%TMSB+0.5%LiDF OB | 110 | 77.2 | 70.5 | 72.1 | 55.9 | 15.9 |

It may be learned from the above results that, both the silane additive and the fluorine-containing lithium salt additive have a synergistic effect, one cannot be without the other; and the low-temperature and the rate performance of the battery are taken into consideration while high-temperature storage and high-temperature cycle stability are guaranteed. By means of the combined use of the silane additive and the fluorine-containing lithium salt additive, comprehensive performance is better than that without using additives in the comparative examples, with single silane additive or single fluorine-containing lithium salt additive and a combination of common high-temperature additives (such as the PS, the PST and the TMSB) and the fluorine-containing lithium salt additive.

## Claims

1. Use of a silane additive with carbon-carbon triple bond in an electrolyte, the silane additive being capable of inhibiting the gas production of a cell and has a structure shown as the following formula (I): 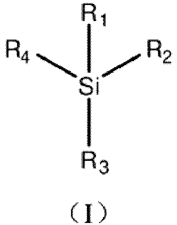 wherein, R1, R2, R3 and R4 are independently selected from any one of alkyl, alkynyl, fluoroalkyl or fluoroalkynyl; and at least one of the R1, the R2, the R3 or the R4 contains a carbon-carbon triple bond.

2. The use of a silane additive with carbon-carbon triple bond in an electrolyte according to claim 1, wherein the R1, the R2, the R3 and the R4 are independently selected from one of C1-C6 alkyl, C2-C6 alkynyl, fluoro C1-C6 alkyl or fluoro C2-C6 alkynyl.

3. The use of a silane additive with carbon-carbon triple bond in an electrolyte according to claim 2, wherein the R1, the R2, the R3 and the R4 are independently selected from one of methyl, ethyl, trifluoromethyl, trifluoroethyl, ethynyl or propynyl.

4. The use of a silane additive with carbon-carbon triple bond in an electrolyte according to claim 3, wherein the silane additive is selected from at least one of the following structures:

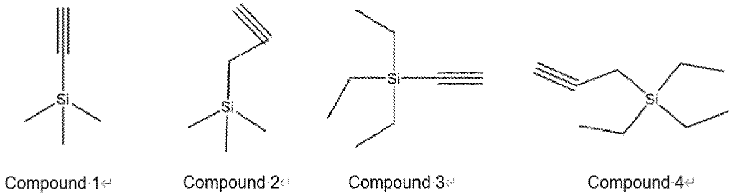

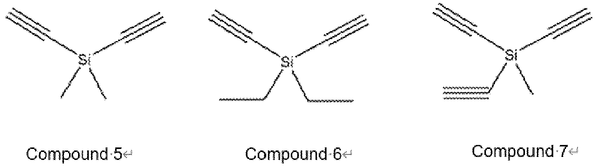

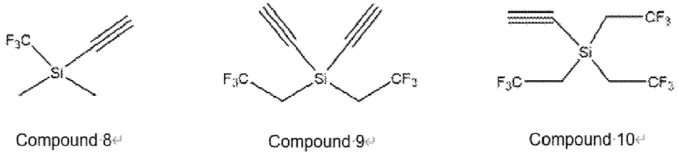

5. The use of a silane additive with carbon-carbon triple bond in an electrolyte according to any of claims 1 to 4, wherein the mass of the silane additive accounts for 0.1-5.0% of the total mass of the electrolyte.

6. Use of a combined additive of the silane additive according to any of claims 1 to 5 and a film-forming additive in an electrolyte, wherein a film-forming potential of the film-forming additive is lower than 1.5V (vs. Li⁺/Li).

7. The use of a combined additive of the silane additive and a film-forming additive in an electrolyte according to claim 6, wherein the film-forming additive is selected from at least one of an anhydride compound, a sulfonate compound, a sulfate compound, a trimethylsilyl compound, an unsaturated cyclic carbonate compound or a fluoro cyclic carbonate compound.

8. The use of a combined additive of the silane additive and a film-forming additive in an electrolyte according to claim 6 or 7, wherein the mass of the film-forming additive accounts for 0.1-8.0% of the total mass of the electrolyte.

9. A lithium ion battery electrolyte, comprising a lithium salt and organic solvents, wherein the electrolyte further comprises the silane additive according to any of claims 1 to 5 or the combined additive of the silane additive and the film-forming additive according to any of claims 6 to 8.

10. The lithium ion battery electrolyte according to claim 9, wherein the lithium salt is selected from at least one of lithium hexafluorophosphate(LiPF₆), lithium tetrafluoroborate (LiBF₄), lithium bis(oxalato)borate(LiBOB), lithium difluoro(oxalato)borate(LiDFOB), lithium bis(fluorosulfonyl)imide(LiFSI) or lithium bis(trifluoromethanesulfonyl)imide(LiTFSI); and the concentration of the lithium salt in the electrolyte is 0.3 mol/L - 3 mol/L.

11. The lithium ion battery electrolyte according to claim 9, wherein the organic solvents are selected from C3-C6 carbonate compound, C3-C8 carboxylic ester compound, sulfone compound or ether compound.

12. A lithium ion battery, comprising positive electrode, negative electrode and separator, wherein the lithium ion battery further comprises the electrolyte according to any of claims 9 to 11.

13. Use of a silane additive composition in an electrolyte, wherein the composition comprises:
a silane additive, selected from the silane additive with carbon-carbon triple bond according to any of claims 1 to 4, and used to inhibit the gas production of a cell, wherein the mass of the silane additive accounts for 0.01%-10.0% of the total mass of the electrolyte; and
a fluorine-containing lithium salt additive, used to improve initial impedance of the cell and inhibit the growth of impedance of the cell during circulation, wherein the mass of the fluorine-containing lithium salt additive accounts for 0.1%-10.0% of the total mass of the electrolyte.

14. The use of a silane additive composition in an electrolyte according to claim 13, wherein the mass of the silane additive accounts for 0.1%-3.0% of the total mass of the electrolyte, and the mass of the fluorine-containing lithium salt additive accounts for 0.2%-5.0% of the total mass of the electrolyte.

15. The use of a silane additive composition in an electrolyte according to claim 13, wherein the fluorine-containing lithium salt additive is a fluorine-containing lithium salt compound which uses boron or phosphorus as central ions.

16. The use of a silane additive composition in an electrolyte according to claim 15, wherein the fluorine-containing lithium salt additive is selected from at least one of lithium difluoro(oxalato)borate(LiDFOB), lithium tetrafluoroborate (LiBF₄), lithium difluorodi(oxalato)phosphate (LiDFOP) or lithium tetrafluoro(oxalato)phosphate (LiTFOP).

17. A lithium ion battery electrolyte, comprising a lithium salt and organic solvents, wherein the electrolyte further comprises the silane additive composition according to any of claims 13 to 16.

18. The lithium ion battery electrolyte according to claim 17, wherein the lithium salt is selected from at least one of lithium hexafluorophosphate(LiPF₆), lithium bis(fluorosulfonyl)imide(LiFSI) or lithium bis(trifluoromethanesulfonyl)imide(LiTFSI); and the molar concentration of the lithium salt in the electrolyte is 0.4 mol/L - 1.6 mol/L.

19. The lithium ion battery electrolyte according to claim 17, wherein the organic solvents are selected from C3-C6 carbonate compound, C3-C8 carboxylic ester compound, sulfone compound or ether compound.

20. A lithium ion battery, comprising:
a positive electrode sheet containing a positive active material, a negative electrode sheet containing a negative active material, a separator and the electrolyte according to any of claims 17 to 19.

21. A method for simultaneously improving the high-temperature storage performance and high-temperature cycle performance of a battery, comprising: adding, in an electrolyte, the silane additive according to any of claims 6 to 8 shown in a formula (I) while the mass of the silane additive accounts for 0.1 %-5.0% of the total mass of the electrolyte and a film-forming additive with the mass accounting for 0.1 % -8.0 % of the total mass of the electrolyte, or adding the silane additive composition according to any of claims 13 to 16 in the electrolyte.
